# EUROPÄISCHE PATENTSCHRIFT

(11) **EP 0 503 527 B1**
(45) Veröffentlichungstag und Bekanntmachung des Hinweises auf die Patenterteilung: **17.05.1995**
(21) Anmeldenummer: 92103984.8
(22) Anmeldetag: 09.03.1992
(51) Int. Cl.: H02G 3/14, H02G 3/16

(54) **Anschluss von Telekommunikationsgeräten**
Connection for telecommunication apparatus
Connexion pour appareil de télécommunication

(30) Priorität: 15.03.1991 DE 4108446
(43) Veröffentlichungstag der Anmeldung: 16.09.1992
(73) Patentinhaber: ABB PATENT GmbH, 68309 Mannheim (DE)
(72) Erfinder: Elsinger, Herbert, W-8150 Holzkirchen (DE)
(74) Vertreter: Rupprecht, Klaus, Dipl.-Ing.

(56) Entgegenhaltungen:
- CH-A- 0 385 950
- FR-A- 2 635 922
- GB-A- 1 492 961

## Beschreibung

Die Erfindung betrifft ein elektrisches Installationsgerät zum Anschluß von Telekommunikationsgeräten gemäß dem Oberbegriff des Anspruchs 1.

Elektrische Installationsgeräte, die das Ein- und Ausschalten elektrischer Verbraucher, zum Beispiel Lampen, ermöglichen, sowie zur unmittelbaren Stromversorgung elektrischer Verbraucher in Form von Steckdosen sind bekannt. Ferner ist bekannt, den Anschluß von Telekommunikationsgeräten, zum Beispiel Telefon, Telefax sowie Einrichtung zur Datenfernübertragung, mittels speziell ausgestalteter Anschlußvorrichtungen vorzusehen.

Aus der DE-OS 38 42 205 ist ein Gehäuse für den Anschluß von Kommunikationssystemen bekannt, das einen abnehmbaren Montageeinsatz zum Anbringen von Steckverbindern, Buchsen oder dergleichen aufweist, welches gegebenenfalls unter Zwischenschaltung eines Abdeckrahmens und/oder eines Tragringes mit einer Unter- oder Aufputzdose oder mit einem Kabelkanal verbindbar ist. Zweck der bekannten Vorrichtung ist, die wahlweise Benutzung unterschiedlicher Montageeinsätze in unterschiedlichen Lagen zu ermöglichen. Hierzu weist das Gehäuse an den Innenseiten seiner Seitenwandungen mehrere Nuten bildende Anformungen auf zur Aufnahme des jeweiligen Montageeinsatzes, der in sich gegenüberliegenden Nuten eingeführt wird.

Im Falle dieser bekannten Vorrichtung erfolgt die Halterung des jeweiligen Montageeinsatzes und damit die Aufnahme der bei seiner Betätigung, zum Beispiel Aufstecken eines Anschlußsteckers eines Kommunikationsgerätes, eingeleiteten Kräfte ausschließlich über das mit einer Dose verbundene Gehäuse.

Aufgrund der Tatsache, daß der Montageeinsatz nur im Zusammenwirken mit dem Gehäuse des Installationsgerätes eine definierte Lage in Bezug auf den Montageort einnimmt und bei Abnehmen des Gehäuses, in welchem der Montageeinsatz geführt ist, der Schwerkraft folgt und lose herunterhängt bzw. auf den Boden fällt, ergeben sich insbesondere Probleme beim elektrischen Anschluß der zugehörigen Anschlußleitung an den jeweiligen Montageeinsatz, da dieser gehalten werden muß, während gleichzeitig die jeweilige Anschlußleitung sowie das erforderliche Montagegerät, zum Beispiel Lötkolben, ebenfalls gehalten werden müssen.

Ausgehend vom vorgenannten Stand der Technik ist es Aufgabe der Erfindung, ein elektrisches Installationsgerät der eingangs genannten Art zu schaffen, welches eine erleichterte Montage des Montageeinsatzes erlaubt und bei welchem der Montageeinsatz nicht ausschließlich durch die ihn umfassende Zentralscheibe gehaltert wird.

Zur Lösung dieser Aufgabe ist ein Installationsgerät gemäß dem Anspruch 1 vorgesehen.

Mit der erfindungsgemäßen Ausgestaltung des elektrischen Installationsgerätes ist ermöglicht, daß auch nach Abnehmen der Zentralscheibe das Sockelteil, das weiterhin im Tragring eingesteckt bleibt, einerseits nahe dem Montageort verbleibt und andererseits eine definierte Lage einnimmt, so daß die elektrische Verbindung der Anschlußleitung mit dem jeweiligen Sockeleinsatz problemlos möglich ist. Eine besondere nur der Montage dienende Halterung bzw. ein weiterer Helfer - wie beim Stand der Technik erforderlich - kann hier entfallen.

Ein weiterer Vorteil der erfindungsgemäßen Ausgestaltung besteht darin, daß das Sockelteil zur Aufnahme des jeweiligen Anschlußsockels formschlüssig in den Tragring eingreift, so daß bei der Betätigung des Sockelteils im Betrieb, nämlich beim Einführen eines entsprechenden Steckers in den Sockeleinsatz, auftretende Kräfte nicht ausschließlich von der Zentralscheibe sondern auch unmittelbar vom Tragring aufgenommen werden. Entsprechendes gilt für den Betriebsfall selbst, nämlich wenn über die an den eingeführten Stecker anschließenden Leitungen Kräfte auf die jeweilige Anschlußstelle übertragen werden, zum Beispiel durch Zugbeanspruchung.

In vorteilhafter Ausgestaltung der Erfindung ist vorgesehen, daß das Sockelteil mit einer Anschlußfläche versehen ist, die zur Montagefläche unter einem Winkel zwischen 45 und 90°, vorzugsweise 75°, geneigt ist.

Durch die Neigung ist die Möglichkeit gegeben, mehrere, das heißt bliebig viele, Anschlußstellen für Telekommunikationsgeräte übereinander zum Beispiel senkrecht übereinander an einer vertikalen Montagefläche, vorzusehen, ohne daß die Anschlußstecker der Telekommunikationgeräte miteinander kollidieren. Mit der Neigung der Anschlußflächen ist der Nachteil vermieden, daß wegen der aus der Montagefläche hervortretenden Anschlußflächen jeweils nur der unterste Montageplatz genutzt werden kann oder jeweils ein gewisser über den üblichen Mittenabstand der standardisierten Zentralscheiben hinausgehender Abstand erforderlich ist.

Es ist daher möglich, die Anschlüsse für Telekommunikationsgeräte als vertikale Anschlußleiste anzuordnen, wobei der Montageort so gewählt werden kann, daß er den normalen Arbeitsbereich nicht beeinträchtigt und dennoch bequem zugänglich ist.

Eine weitere Ausgestaltung der Erfindung sieht vor, daß der Tragring mit einem zusätzlichen Schlitz für den Eingriff des Sockelteils in den Tragring versehen ist.

Ferner ist vorgesehen, daß das Sockelteil in seiner Anschlußfläche eine Ausnehmung aufweist, die der Aufnahme eines den jeweiligen Erfordernissen angepaßten speziellen Anschlußsockels dient.

Um ein zufälliges Herausgleiten des Sockelteils aus dem Tragring zu verhindern, wenn die Zentralscheibe abgenommen ist, kann das Sockelteil eine mit hakenähnlichen Vorsprüngen versehenen Haltelasche besitzen, welche in den Tragring eingreift, wobei die an die Haltelasche angeformten Haken den Tragring hintergreifen.

Ferner besitzt gemäß einer weiteren Ausgestaltung der Erfindung das Sockelteil rampenartige Anformungen, welche sich an die Schlitzkanten im Tragring anlegen, sowie Abstützflächen zur Begrenzung der Einführtiefe in den Tragring, wodurch eine spielfreie Führung und Krafteinleitung in den Tragring gewährleistet ist.

Ferner ist gemäß einer Weiterentwicklung der Erfindung vorgesehen, das Sockelteil mit seitlichen Führungsflächen zu versehen, die mit der Zentralscheibe zusammenwirken und zur eindeutigen Lagerung des Sockelteils dienen, indem auf diese Weise laterale Verschiebungen des Sockelteiles verhindert werden.

Die Zentralscheibe selbst kann haubenförmig ausgebildet sein und kann das Sockelteil an den vom Tragring hervorragenden drei Kantenflächen umfassen.

Der gemäß einer Ausgestaltung der Erfindung zur Verwendung vorgesehene Abdeckrahmen ist mit versenkten Aufnahmeflächen ausgestaltet, in welche die Zentralscheibe paßgenau eingreift. Hierbei wird das Sockelteil formschlüssig zwischen Tragring und Zentralscheibe fixiert.

Aufgrund der rampenartigen Anformungen an der Haltelasche des Sockelteils sind auch Bewegungen des Sockelteils quer zur Längsachse des zusätzlichen Schlitzes im Tragring ausgeschlossen.

Diese und weitere vorteilhafte Ausgestaltungen sind in den Unteransprüchen gekennzeichnet.

Anhand eines Ausführungsbeispieles sollen die Erfindung, besondere Ausgestaltungen und Vorteile der Erfindung näher erläutert und beschrieben werden. Es zeigen:
- Fig. 1: eine Schrägansicht eines Tragrings mit einem zum Eingriff vorgesehenen Sockelteil,
- Fig. 2: eine Seitenansicht eines Montageortes mit in einen Tragring eingesetzten Sockelteil,
- Fig. 3: einen Doppelanschlußplatz gemäß der Erfindung, davon einer mit montierter Zentralscheibe.

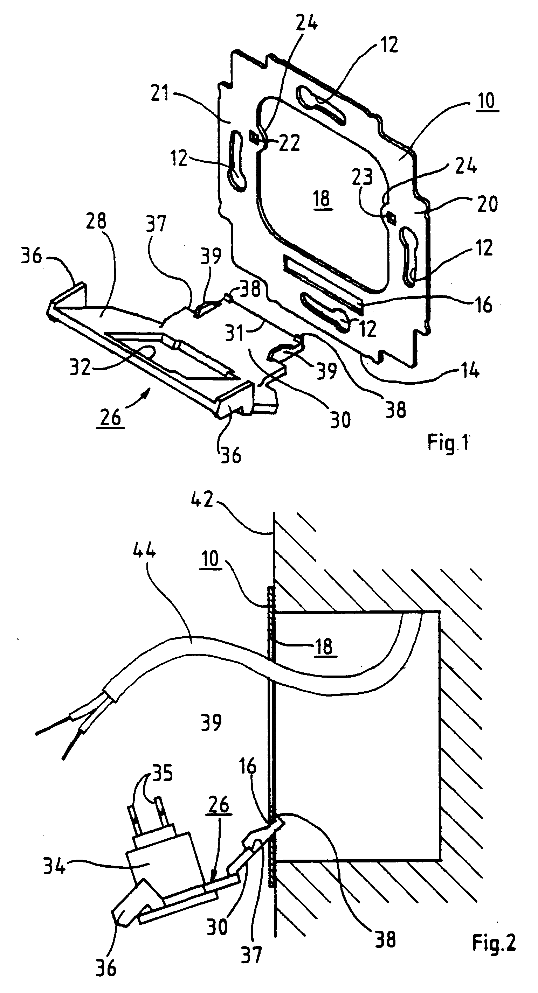

In Fig. 1 ist ein Tragring 10 in Schrägansicht dargestellt, der neben den am Umfang verteilten üblichen Schlüssellöchern 12 an der montagemäßig unten liegenden Seite 14 einen querlaufenden Längsschlitz 16 mit rechteckigem Querschnitt aufweist. Der Schlitz 16 ist im Bereich zwischen der äußeren Seitenkante 14 und einer sich hierzu parallel erstreckenden nahezu quadratischen Ausnehmung 18 im Tragring 10 angeordnet und erstreckt sich parallel hierzu.

Die Ausnehmung 18 ist im Hinblick auf den in die Tragringfläche einzulassenden Schlitz 16 außermittig angeordnet, dient aber wie in herkömmlichen Installationsgeräten zur Unterbringung der zum Installationsgerät gehörigen Teile.

In den beiden Seitenstreifen 20, 21 des Tragrings 10, welche senkrecht zur Seitenkante 14 verlaufen, sind weitere Ausnehmungen 22, 23 vorgesehen, die jeweils zur Aufnahme einer Befestigungsschraube bei der Montage des Installationsgerätes dienen. Im gezeigten Beispiel weist die Ausnehmung 18 im Bereich der Ausnehmungen 22, 23 wegen derer randnaher Lage in die Ausnehmung 18 ragende Anformungen 24 auf, um so ausreichende Stabilität zu gewährleisten.

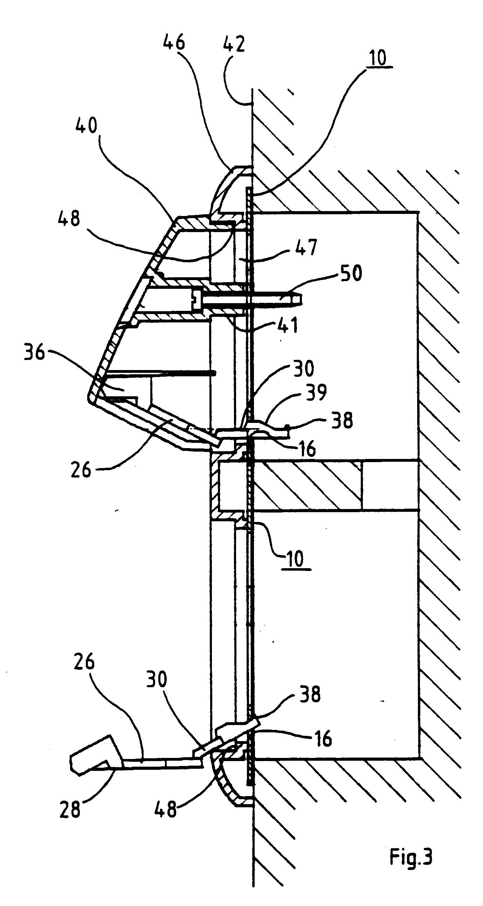

In entsprechender Lage zum Tragring 10 zeigt Fig. 1 ferner ein Sockelteil 26, welches vorzugsweise als Kunststofformteil hergestellt ist und aus einer Aufnahmefläche 28 sowie einer hieran abgewinkelt anschließenden Haltelasche 30 gebildet ist. In der Aufnahmefläche 28, deren Rückseite in Fig. 1 zu erkennen ist, ist eine Ausnehmung 32 eingelassen, in welche ein für den jeweiligen Verwendungsfall vorgesehener, hier aber nicht näher gezeigter Anschlußsockel 34, wie er in Fig. 2 gezeigt ist, eingesetzt werden kann. Die Schmalseiten der annähernd rechteckigen Aufnahmefläche 28 werden jeweils begrenzt von hieran angeformten Führungsflächen 36. Diese Führungsflächen 36 dienen im Zusammenwirken mit einer aus Fig. 3 ersichtlichen Zentralscheibe 40 dazu, das Sockelteil 26 eindeutig in seiner Einbaulage unverrückbar zu fixieren. An die Anschlußfläche 28 schließt unter einem Winkel von etwa 30° hierzu geneigt die Haltelasche 30 an, die zur Befestigung am Tragring 10 dient. Zu diesem Zweck wird die Haltelasche 30 in den Schlitz 16 in Tragring 10 eingeführt, wobei an der freien Längskante 31 der Haltelasche 30 Haltenocken 38 angeordnet sind, die hakenförmig ausgebildet dazu dienen, das Herausgleiten der Haltelasche 30 aus dem Schlitz 16 im Tragring 10 zu verhindern, in dem die Nocken 38 den Tragring 10 hintergreifen. Die Haltelasche 30 ist ebenfalls annähernd rechteckig ausgestaltet, wobei jedoch zum freien Ende hin symetrische Einformungen vorgesehen sind. Hierdurch wird die Haltelasche 30 bereichsweise schmaler, wobei ihre Länge entlang der Kante 31 der Länge des Schlitzes 16 im Tragring 10 entspricht. Hierdurch ist gewährleistet, daß sich die Haltelasche 30 beim Einführen in den Schlitz 16 an dessen seitliche Begrenzung spielfrei anlegt. Ergänzend ist der soeben beschriebene schmale Streifen der Haltelasche 30 beiderseits mit rampenartigen Anformungen 39 versehen, die zusätzlich das Höhenspiel der in den Schlitz 16 eingeführten Haltelasche 30 begrenzen.

Während die hakenförmigen Haltenocken 38 ein Herausgleiten der Haltelasche 30 aus dem Schlitz 16 während der Montage verhindern, dienen die rampenartigen Anformungen 39 dazu, das Sockelteil 26 in seiner Gebrauchslage derart im Tragring 10 zu verankern, daß bei der Benutzung des Installationsgerätes auftretende mechanische Beanspruchungen unmittelbar auf den Tragring 10 übertragen werden. Ergänzend dient hierfür zusätzlich noch die Zentralscheibe 40, wie aus Fig. 3 ersichtlich.

In Fig. 2 ist im Längsschnitt ein Einbauort mit einem an einer Montagefläche 42 befestigten Tragring 10 dargestellt. Wie aus Fig. 1 bereits ersichtlich befindet sich im unteren Bereich des Tragrings 10 der Schlitz 16, durch welchen die Haltelasche 30 eines Sockelteils 26 gesteckt ist. Die an der Haltelasche 30 endseitig angeformten Nocken 38 greifen hierbei, wie in Fig. 2 gut zu erkennen ist, hinter den Tragring 10 und verhindern so ein Herausgleiten des Sockelteils 26 aus dem Tragring 10. Hierbei dient die untere Kante des Schlitzes 16 als Auflager und bildet im Zusammenwirken mit den Nocken 38 einen Drehpunkt für das Sockelteil 26, welches sich unter Einwirkung der Schwerkraft nach unten abkippt, bis die Nocken 38 am Tragring 10 anliegen.

In die Öffnung 32 in der Aufnahmefläche 28 des Sockelteils 26 ist ein Anschlußsockel 34 eingesetzt, der zwei Anschlußstifte 35 aufweist, die mit einem am Einbauort aus der Montagefläche tretenden Anschlußkabel 44 zu verbinden sind.

Wie die Fig. 2 deutlich macht, bedarf der Anschlußsockel 34 keiner zusätzlichen Maßnahme zu seiner Halterung. Er ist vielmehr über die am Tragring 10 festgelegte Haltelasche 30 des Sockelteils 26 ausreichend stabil gehalten, so daß eine Verbindung des Anschlußkabels 44 mit einem der Stifte 35, zum Beispiel mittels Löten, problemlos möglich ist, ohne daß es weiterer Haltemaßnahmen bedarf.

Nach Herstellen der Verbindung des Anschlußkabels 44 mit dem Anschlußsockel 34 kann die Endmontage des Installationsgerätes erfolgen, wie es aus Fig. 3 ersichtlich ist.

In Fig. 3 ist ein zweifacher Einbauort für ein erfindungsgemäßes Installationsgerät im Längsschnitt dargestellt, wobei zwei übereinander angeordnete Tragringe 10 an einer Montagefläche 42 befestigt sind. In beide Tragringe 10 ist jeweils ein Sockelteil 26 eingesetzt wobei im oberen Tragring 10 das Sockelteil bereits in seiner Einbaulage, das heißt Gebrauchslage, sich befindet, in welcher die Haltelasche 30 des Sockelteils 26 bis zum Anschlag an seine die Einführtiefe begrenzende Stützflächen eingeführt ist. Hierbei befindet sich die Haltelasche 30, die mit ihren seitlichen Führungsflächen 39 sich sowohl seitlich als auch oben und unten an die Schlitzkanten des im Tragring 10 befindlichen Schlitzes 16 anlegt, in einer horizontalen Lage. Die Anschlußfläche 28, welche mit der Haltelasche 30 einen Winkel bildet, weist mit ihrem freien Ende, an welchem die seitlichen Führungsflächen 36 angeformt sind leicht nach oben. Als weiteres Teil ist auf die übereinander angeordneten Tragringe 10 ein Abdeckrahmen 46 gesetzt, der die an der Montagefläche 42 aufliegenden Tragringe 10 in bekannter Weise rahmenartig abdeckt und lediglich eine Montageöffnung für das jeweilige einzusetzende Installationsgerät aufweist. Ferner weist der Abdeckrahmen 46 für jeden einem Tragring 10 zugeordneten Einbauort eine versenkte Aufnahmefläche 48 auf, die bordartig die Zugangsöffnung 47 umfaßt.

In diese versenkte Aufnahmefläche 48 greift die haubenförmig ausgebildete Zentralscheibe 40, welche als Abdeckung für die jeweilige Anschlußstelle dient. Zur Lagefixierung der Zentralscheibe 40 sind Schrauben 50 vorgesehen, welche in die aus Fig. 1 ersichtlichen im Tragring 10 angeordneten Ausnehmungen 22, 23 eingreifen. Aus ästhetischen Gründen sind die Befestigungsschrauben 50 versenkt in der Zentralscheibe 40 angeordnet.

Wie ferner aus der Fig. 3 ersichtlich ist, weist der Führungszapfen 41 für die Befestigungsschraube 50 eine Länge auf, daß er unter Vorspannung am Tragring 10 zur Anlage kommt. Hierdurch ist ebenfalls eine sichere Einleitung von äußeren Kräften in den Tragring 10 gewährleistet, die aus dem Betrieb in Form von an der Anschlußfläche des Sockelteils angreifenden Zugspannungen sich teils auch auf die Zentralscheibe 40 übertragen.

Der in Fig. 3 unten gezeigte Einbauort ist lediglich mit einem Sockelteil 26 versehen, welches in den entsprechenden Schlitz 16 im Tragring 10 mit seiner Haltelasche 30 eingehängt ist, wobei die Nocken 38 den Tragring 10 hintergreifen und so ein herausgleiten verhindern. Gegenüber der aus Fig. 2 ersichtlichen Lage befindet sich die Anschlußfläche 28 des Sockelteils 26 hier in einer horizontalen Lage, da sich die Haltelasche 30 an der Innenkante der versenkten Aufnahmefläche 48 des Abdeckrahmens 46 abstützt.

Nicht näher gezeigt ist in den Figuren 1 bis 3 die Art und Weise, wie der Tragring 10 an der Montagefläche 42 jeweils befestigt ist. Dieses kann in herkömmlicher Weise mittels Spreizen bzw. auch mittels in die Montagefläche eingelassener Schrauben bzw. Bolzen, die in die Schlüssellöcher 12 des Tragrings 10 greifen erfolgen.

## Patentansprüche

1. Elektrisches Installationsgerät zum Anschluß von Telekommunikationsgeräten mit einem Tragring (10), mit einem Sockelteil (26) zur Aufnahme eines Anschlußsockels (34), mit einem Abdeckrahmen (46) und mit einer Zentralscheibe (40) für die Unterputzmontage, wobei die Zentralscheibe (40) unter Zwischenfügung des Abdeckrahmens (46) mit dem Tragring (10) verbunden ist, dadurch gekennzeichnet, daß das Sockelteil (26) formschlüssig in den Tragring (10) eingreift, daß die Zentralscheibe (40) das Sockelteil (26) in seiner Gebrauchslage fixiert, und daß bei der Betätigung des Sockelteils (26) im Betrieb auftretende Kräfte nicht nur von der Zentralscheibe (40) sondern auch unmittelbar vom Tragring (10) aufgenommen werden.

2. Elektrisches Installationsgerät nach Anspruch 1, dadurch gekennzeichnet, daß der Tragring (10) einen zusätzlichen Schlitz (16) für den Eingriff des Sockelteils (26) aufweist.

3. Elektrisches Installationsgerät nach Anspruch 1, dadurch gekennzeichnet, daß die Zentralscheibe (40) haubenförmig ausgebildet ist.

4. Elektrisches Installationsgerät nach Anspruch 1, dadurch gekennzeichnet, daß der Abdeckrahmen (46) mit einer versenkten Aufnahmefläche (48) versehen ist.

5. Elektrisches Installationsgerät nach einem der vorherigen Ansprüche, dadurch gekennzeichnet, daß die Zentralscheibe (40) paßgenau in die Aufnahmefläche (48) im Abdeckrahmen (46) eingreift.

6. Elektrisches Installationsgerät nach einem der vorherigen Ansprüche, dadurch gekennzeichnet, daß die Zentralscheibe (40) mittels Schrauben (50) am Tragring (10) befestigt ist.

7. Elektrisches Installationsgerät nach einem der vorherigen Ansprüchen, dadurch gekennzeichnet, daß die Befestigungsschrauben (50) in mit der Zentralscheibe (40) einstückig verbundenen Führungen (41) geführt sind, deren freie Enden in Gebrauchslage unter Vorspannung am Tragring (10) anliegen.

8. Elektrisches Installationsgerät nach einem der vorherigen Ansprüche, dadurch gekennzeichnet, daß das Sockelteil (26) eine Anschlußfläche (28) und eine hiermit einstückig verbundene Haltelasche (30) aufweist, welche in den Schlitz (16) im Tragring (10) eingreift.

9. Elektrisches Installationsgerät nach Anspruch 8, dadurch gekennzeichnet, daß das Sockelteil (26) in seiner Anschlußfläche (28) eine Ausnehmung (32) aufweist, in welche ein Anschlußsockel (34) einsetzbar ist.

10. Elektrisches Installationsgerät nach einem der vorherigen Ansprüche, dadurch gekennzeichnet, daß die Haltelasche (30) abgewinkelt an die Anschlußfläche (28) anschließt.

11. Elektrisches Installationsgerät nach einem der vorherigen Ansprüche, dadurch gekennzeichnet, daß die Anschlußfläche (28) des Sockelteils (26) in der Gebrauchslage einen Neigungswinkel zur Montagefläche (42) zwischen 45 und 90°, vorzugsweise 75°, aufweist.

12. Elektrisches Installationsgerät nach einem der vorherigen Ansprüche, dadurch gekennzeichnet, daß die Haltelasche an ihrem freien Ende verjüngt ist, so daß beiderseits Abstützflächen (37) gebildet sind, welche die Einführtiefe in den Schlitz (16) im Tragring (10) begrenzen.

13. Elektrisches Installationsgerät nach einem der vorherigen Ansprüche, dadurch gekennzeichnet, daß die Haltelasche im verjüngten Bereich beiderseits rampenartige Anformungen (39) aufweist, die eine spielfreie Halterung im Schnitt (16) im Tragring (10) gewährleisten.

14. Elektrisches Installationsgerät nach einem der vorherigen Ansprüche, dadurch gekennzeichnet, daß am freien Ende im verjüngten Bereich der Haltelasche (30) stirnseitig hakenförmige Nocken (38) angeformt sind, welche nach Einführen des Sockelteils (26) in den Schlitz (16) im Tragring (10) diesen hintergreifen und das Sockelteil (26) gegen selbsttätiges Herausgleiten aus dem Tragring (10) sichern.

15. Elektrisches Installationsgerät nach einem der vorherigen Ansprüche, dadurch gekennzeichnet, daß das Sockelteil (26) im Bereich seiner Anschlußfläche (28) beiderseits angeformte Führungsflächen (36) aufweist, die mit der Zentralscheibe (40) zusammenwirken und laterale Verschiebungen des Sockelteils (26) verhindern.

16. Elektrisches Installationsgerät mit den Merkmalen nach einem der vorhergehenden Ansprüchen, zum Mehrfachanschluß von Telekommunikationsgeräten, dadurch gekennzeichnet, daß wenigstens zwei übereinander angeordnete in Zentralscheiben (10) eingesetzte Modulteile (26) vorgesehen sind, deren Anschlußfläche (28) abgewinkelt ist zur Montagefläche (42).

## Claims

1. Electrical installation device for the connection of telecommunications equipment, having a supporting ring (10), a base part (26) for the reception of a connector base (34), a covering frame (46) and a central plate (40) for flush mounting, the central plate (40) being connected to the supporting ring (10) with the covering frame (46) interposed between them, characterized in that the base part (26) engages positively in the supporting ring (10), in that the central plate (40) fixes the base part (26) in its position of use and in that, when the base part (26) is actuated, forces which occur in operation are not taken only by the central plate (40) but also directly by the supporting ring (10).

2. Electrical installation device according to Claim 1, characterized in that the supporting ring (10) has an additional slot (16) for the engagement of the base part (26).

3. Electrical installation device according to Claim 1, characterized in that the central plate (40) is in the form of a hood.

4. Electrical installation device according to Claim 1, characterized in that the covering frame (46) is provided with a recessed reception surface (48).

5. Electrical installation device according to one of the preceding claims, characterized in that the central plate (40) engages with an accurate fit in the reception surface (48) in the covering frame (46).

6. Electrical installation device according to one of the preceding claims, characterized in that the central plate (40) is fastened to the supporting ring (10) by means of screws (50).

7. Electrical installation device according to one of the preceding claims, characterized in that the fastening screws (50) are guided in guides (41) which are connected integrally to the central plate (40) and the free ends of which rest under preload against the supporting ring (10) in the position of use.

8. Electrical installation device according to one of the preceding claims, characterized in that the base part (26) has a connection surface (28) and a retaining tab (30) connected integrally thereto, which engages in the slot (16) in the supporting ring (10).

9. Electrical installation device according to Claim 8, characterized in that the base part (26) has in its connection surface (28) a recess (32) into which a connector base (34) can be inserted.

10. Electrical installation device according to one of the preceding claims, characterized in that the retaining tab (30) adjoins the connection surface (28) at an angle.

11. Electrical installation device according to one of the preceding claims, characterized in that the connection surface (28) of the base part (26) has an angle of inclination of between 45 and 90 °, preferably 75 °, to the mounting surface (42) in the position of use.

12. Electrical installation device according to one of the preceding claims, characterized in that the retaining tab is tapered at its free end, thus forming on both sides supporting surfaces (37) which limit the depth of insertion into the slot (16) in the supporting ring (10).

13. Electrical installation device according to one of the preceding claims, characterized in that the retaining tab has integrally formed ramp-like features (39) on both sides in the tapered region and these guarantee play-free retention in the incision (16) in the supporting ring (10).

14. Electrical installation device according to one of the preceding claims, characterized in that hook-shaped projections (38) are formed integrally on the free end, at the end face, in the tapered region of the retaining tab (30) and, after introduction of the base part (26) into the slot (16) in the supporting ring (10), the said projections reach behind the latter and secure the base part (26) against sliding spontaneously out of the supporting ring (10).

15. Electrical installation device according to one of the preceding claims, characterized in that the base part (26) has integrally formed guide surfaces (36) on both sides in the region of its connection surface (28), the said guide surfaces interacting with the central plate (40) and preventing lateral displacements of the base part (26).

16. Electrical installation device having the features in accordance with one of the preceding claims, for the multiple connection of telecommunications equipment, characterized in that at least two modular parts (26) arranged one above the other and inserted into central plates (40) are provided and their connection surface (28) is angled relative to the mounting surface (42).

## Revendications

1. Dispositif d'installation électrique pour le raccordement de dispositifs de télécommunication à un anneau porteur (10), comportant une partie de prise (26) pour recevoir une prise de raccordement (34), un cadre de recouvrement (46) et une plaque centrale (40) pour le montage encastré, la plaque centrale (40) étant reliée à l'anneau porteur (10) avec interposition du cadre de recouvrement (46), caractérisé en ce que la partie de prise (26) pénètre avec une liaison par la forme dans l'anneau porteur (10), en ce que la plaque centrale (40) fixe dans sa position d'utilisation la partie de prise (26) et en ce que des forces apparaissant en cours de fonctionnement, lors de la manoeuvre de la partie de prise (26) ne sont pas reprises seulement par la plaque centrale (40) mais également directement par l'anneau porteur (10).

2. Dispositif d'installation électrique suivant la revendication 1, caractérisé en ce que l'anneau porteur (10) présente une entaille supplémentaire (16) pour la mise en prise de la partie de prise (26).

3. Dispositif d'installation électrique suivant la revendication 1, caractérisé en ce que la plaque centrale (40) est réalisée en forme de calotte.

4. Dispositif d'installation électrique suivant la revendication 1, caractérisé en ce que le cadre de recouvrement (46) est muni d'une surface de réception enfoncée (48).

5. Dispositif d'installation électrique suivant l'une quelconque des revendications précédentes, caractérisé en ce que la plaque centrale (40) entre en prise de façon ajustée dans la surface de réception (48), dans le cadre de recouvrement (46).

6. Dispositif d'installation électrique suivant l'une quelconque des revendications précédentes, caractérisé en ce que la plaque centrale (40) est fixée à l'anneau porteur (10) au moyen de vis (50).

7. Dispositif d'installation électrique suivant l'une quelconque des revendications précédentes, caractérisé en ce que les vis de fixation (50) sont guidées dans des guidages (41) qui sont reliés d'une pièce à la plaque centrale (40) et dont les extrémités libres sont appliquées, en position d'utilisation, contre l'anneau porteur (10) avec une précontrainte.

8. Dispositif d'installation électrique suivant l'une quelconque des revendications précédentes, caractérisé en ce que la partie de prise (26) présente une surface de raccordement (28) et une patte de retenue (30) qui est reliée d'une pièce avec cette dernière surface et qui pénètre dans l'entaille (16) de l'anneau porteur (10).

9. Dispositif d'installation électrique suivant la revendication 8, caractérisé en ce que la partie de prise (26) présente dans sa surface de raccordement (28) un évidement (32) dans lequel peut être insérée une prise de raccordement (34).

10. Dispositif d'installation électrique suivant l'une quelconque des revendications précédentes, caractérisé en ce que la patte de retenue (10) se raccorde de façon coudée à la surface de raccordement (28).

11. Dispositif d'installation électrique suivant l'une quelconque des revendications précédentes, caractérisé en ce que la surface de raccordement (28) de la partie de prise (26) présente dans la position d'utilisation, par rapport à la surface de montage (42), un angle d'inclinaison compris entre 45 et 90°, de préférence de 75°.

12. Dispositif d'installation électrique suivant l'une quelconque des revendications précédentes, caractérisé en ce que la patte de retenue est réduite à son extrémité libre de façon que soient formées, des deux côtés, des surfaces de butée (37) qui limitent la profondeur d'introduction dans l'entaille (16) de l'anneau porteur (10).

13. Dispositif d'installation électrique suivant l'une quelconque des revendications précédentes, caractérisé en ce que la patte de retenue présente dans la zone de réduction, des deux côtés, des façonnages (39) en genre de pente qui assurent une retenue sans jeu dans l'entaille (16) de l'anneau porteur (10).

14. Dispositif d'installation électrique suivant l'une quelconque des revendications précédentes, caractérisé en ce qu'à l'extrémité libre, dans la zone réduite de la patte de retenue (30), sont façonnées, du côté frontal, des bosses (38) en forme de crochet qui, après introduction de la partie de prise (26) dans l'entaille (16) de l'anneau porteur (10) prennent derrière ce dernier et fixent la partie de prise (26) contre une sortie automatique par un glissement hors de l'anneau porteur (10).

15. Dispositif d'installation électrique suivant l'une quelconque des revendications précédentes, caractérisé en ce que la partie de prise (26) présente dans la zone de sa surface de raccordement (28) des surfaces de guidage (36) qui sont façonnées des deux côtés, qui coopèrent avec la plaque centrale (40) et qui empêchent des déplacements latéraux de la partie de prise (26).

16. Dispositif d'installation électrique comportant les particularités suivant l'une quelconque des revendications précédentes, pour le raccordement multiple de dispositifs de télécommunication, caractérisé en ce qu'il est prévu au moins deux éléments modulaires (26) qui sont agencés l'un au-dessus de l'autre, qui sont insérés dans des plaques centrales (10) et dont la surface de raccordement (28) est coudée par rapport à la surface de montage (42).
